# EUROPEAN PATENT APPLICATION

(11) **EP 2 538 647 A1**
(43) Date of publication of application: **26.12.2012**
(21) Application number: 10848776.0
(22) Date of filing: 22.12.2010
(51) Int. Cl.: H04M 7/00, H04M 11/00, G06F 17/24

(54) **DUAL TONE MULTI-FREQUENCY SIGNAL TRANSMISSION METHOD AND DEVICE**

(30) Priority: 01.04.2010 CN 201010142002
(71) Applicant: ZTE Corporation, Shenzhen, Guangdong 518057 (CN)
(72) Inventor: ZHOU, Qiansheng, Shenzhen Guangdong 518057 (CN)
(74) Representative: Tafjord, Harald
(86) International application number: PCT/CN2010/080120
(87) International publication number: WO 2011/120318

(57) **Abstract**

A method and apparatus for transmitting a dual tone multi-frequency (DTMF) signal are disclosed by the present invention. The scheme of the present invention includes: when receiving an input instruction for inputting a DTMF character transmitted by a network side, obtaining the DTMF character to be transmitted and caching the DTMF character in a character queue (102); when receiving a character modification command, modifying the cached character queue according to character modification indication information carried in the character modification command (104); and when determining that all DTMF characters to be transmitted are already cached, transmitting the DTMF characters in the cached character queue to the network side according to the order of the DTMF characters in the character queue (106). The technical scheme of the present invention can improve the operability of the service and the accuracy of character input, facilitate the user operation, provide convenience for the user to edit the DTMF characters to be transmitted during the process of service use and improve the experience effect of the user using interactive control service.

## Description

### Technical Field

The present invention relates to the field of signal processing technology, and in particular, to a method and apparatus for transmitting a dual tone multi-frequency (DTMF) signal with a buffer control function.

### Background of the Related Art

In the use of the current communication terminals (for example: mobile phone), the following problems are often met:
for example: when using the telephone recharging service business to recharge for other mobile phones, it generally needs to input the mobile phone number to be recharged, and if the mobile phone number to be recharged is stored in the address book (for example: name card holder) of the mobile phone using the telephone recharging business at this moment, then the user cannot directly invoke the mobile phone number to be recharged in the name card holder and transmit directly to the network end, but has to hang up firstly, record the mobile phone number in the name card holder, and then dial the recharging service telephone again, and input the mobile phone number to be charged in the conversation. In the process of inputting the telephone number, because the DTMF character is transmitted to the network side in real time, that is, one character is transmitted immediately after being input, when a certain character is input incorrectly, the error content cannot be corrected since this character has already been transmitted to the network side, and the user has to re-dial the recharging service telephone to input again after hanging up.
also for example: when using the telephone rechargeable card to recharge the mobile phone, if the telephone recharging service is selected, then it is generally required to input the password, which is generally a rechargeable card password of 17 digits at present, of the rechargeable card in the recharging process. While inputting the rechargeable card password of 17 digits, a certain digit therein is found to be input incorrectly because of fault, but because the DTMF character is transmitted to the network side in real time, the error content already cannot be corrected at this moment, and the only method is to re-dial the recharging service telephone again after hanging up, and input the rechargeable card password of 17 digits more cautiously. If it is input incorrectly again, then the user still needs to hang up and perform the input operation again.

It can be seen from the above-mentioned example scene: in the interactive control service like the telephone recharging etc., in the business using process, the information stored in the terminal cannot be obtained and used. And in the business using process, it often needs to transmit a string of DTMF characters (such as the mobile phone number, account No., the password of the rechargeable card, etc.), and now all the DTMF characters adopt the way of real-time transmission, which is to transmit immediately to the network side after one character is input. After finding the content is input incorrectly, the content cannot be corrected since the content has already been transmitted to the network side in real time, which causes this input to be end in failure. When the number of the digits of the DTMF character to be input increases, the probability of input error in the input process will increase obviously, and the erroneously input character cannot be modified, which brings huge inconvenience to the user's using and makes the input operation of the DTMF signal inefficient, and the frequent repetitive operation causes the waste of the system resources and the network resources.

### Content of the Invention

In view of the above, a method and apparatus for transmitting a dual tone multi-frequency (DTMF) signal are provided in the present invention to solve the problem existing in the related art that it is inconvenient to make modification in the DTMF signal input process and the operation is inefficient.

In order to solve the above-mentioned technical problem, the technical scheme of the present invention is realized as follows:
a method for transmitting a dual tone multi-frequency (DTMF) signal, comprising the following steps of: when receiving an input instruction for inputting a DTMF character transmitted by a network side, obtaining the DTMF character to be transmitted and caching the DTMF character into a character queue; when receiving a character modification command, modifying the cached character queue according to character modification indication information carried in the character modification command; and when determining that all DTMF characters to be transmitted are already cached, transmitting the DTMF characters in the cached character queue to the network side according to an order of the DTMF characters in the character queue.

The step of obtaining the DTMF character to be transmitted comprises: obtaining a user input or pre-stored DTMF character;
the step of obtaining the DTMF character to be transmitted and caching the DTMF character into a character queue specifically comprises: obtaining the user input DTMF characters to be transmitted one by one, and storing the DTMF characters to the character queue in a buffer sequentially according to an obtaining order; or, obtaining pre-stored character strings from a storage device as the DTMF characters to be transmitted and caching the character strings in the character queue according to a storage order of the character strings.

The character modification indication information carried in the character modification command comprises: deleting a selected character in the character queue, modifying a selected character in the character queue, or inserting an appointed character in the character queue.

The step of modifying the cached character queue according to character modification indication information carried in the character modification command specifically comprises: analyzing the received character modification command, and if analyzing out that the character modification indication information carried therein is deleting a selected character in the character queue, determining a location of the selected character in the character queue; and deleting the selected character in the character queue, and moving forward positions of other characters in the character queue after the location of the deleted selected character by one character position sequentially.

The step of modifying the cached character queue according to character modification indication information carried in the character modification command specifically comprises: analyzing the received character modification command, and if analyzing out that the character modification indication information carried therein is modifying a selected character in the character queue, determining a character position of the selected character in the character queue; and deleting the selected character located at the determined character position in the character queue, and storing an appointed character in the character modification indication information in the determined character position.

The modifying the cached character queue according to character modification indication information carried in the character modification command specifically comprises: analyzing the received character modification command, and if analyzing out that the character modification indication information carried therein is inserting an appointed character in the character queue, determining a position to be inserted of the appointed character in the character queue; and moving backward positions of other characters in the character queue at the position to be inserted and after the position to be inserted by one character position, and inserting the appointed character at the position to be inserted.

Before the step of transmitting the DTMF characters in the cached character queue to the network side, the method further comprises: reading the cached DTMF characters from the cached character queue and displaying to a user; after receiving a confirmation instruction transmitted by the user, performing the step of sequentially transmitting the DTMF characters in the cached character queue to the network side according to the order of the DTMF characters in the character queue.

Before the step of transmitting the DTMF characters in the cached character queue to the network side, the method further comprises: checking validity of the DTMF characters in the cached character queue according to a valid character set supported by a DTMF signal; if all cached DTMF characters are the characters in the valid character set supported by the DTMF signal, then determining that the DTMF characters in the character queue are valid; and if detecting that there are other invalid characters not included in the valid character set supported by the DTMF signal in the cached DTMF characters, then prompting the user to modify the detected invalid characters.

An apparatus for transmitting a dual tone multi-frequency (DTMF) signal, comprising:
a caching module, configured to, when receiving an input instruction for inputting a DTMF character transmitted by a network side, obtain the DTMF character to be transmitted and cache the DTMF character into a character queue;
a modifying module, configured to, when receiving a character modification command, modify the cached character queue according to character modification indication information carried in the character modification command;
a judging module, configured to judge whether all DTMF characters to be transmitted are already cached; and
a transmitting module, configured to, when the judging module determines that all DTMF characters to be transmitted are already cached, transmit the DTMF characters in the cached character queue to the network side according to an order of the DTMF characters in the character queue.

The caching module is specifically configured to: when receiving an input instruction for inputting a DTMF character transmitted by a network side, obtain user input DTMF characters to be transmitted one by one, and store the DTMF characters in the character queue in a buffer sequentially according to an obtaining order; or, obtain pre-stored character strings from a storage device as the DTMF characters to be transmitted and cache the character strings in the character queue according to a storage order of the character strings.

The modifying module specifically comprises:
an analyzing module, configured to analyze the received character modification command to obtain the character modification indication information carried therein;
an executing module, configured to, if analyzing out that the character modification indication information carried in the character modification command is deleting a selected character in the character queue, determine a position of the selected character in the character queue, delete the selected character in the character queue, and move forward positions of other characters in the character queue after the position of the deleted selected character by one character position sequentially; if analyzing out that the character modification indication information carried in the character modification command is modifying a selected character in the character queue, determine a character position of the selected character in the character queue, delete the selected character located at the determined character position in the character queue, and store an appointed character in the character modification indication information in the determined character position; and if analyzing out that the character modification indication information carried in the character modification command is inserting an appointed character in the character queue, determine a position to be inserted of the appointed character in the character queue, move backward positions of other characters in the character queue at the position to be inserted and after the position to be inserted by one character position, and insert the appointed character at the position to be inserted.

The apparatus further comprises: a display module, configured to read the cached DTMF characters from the cached character queue and display to a user after the judging module determines that all DTMF characters to be transmitted are already cached, and notify the transmitting module to perform the step of sequentially transmitting the cached DTMF characters to the network side when receiving a confirmation instruction transmitted by the user.

The apparatus further comprises: a checking module, configured to, before the transmitting module transmits the DTMF characters in the cached character queue to the network side, check validity of the DTMF characters in the cached character queue according to a valid character set supported by a DTMF signal; if all cached DTMF characters are the characters in the valid character set supported by the DTMF signal, then determine that the DTMF characters in the character queue are valid, and notify the transmitting module to perform the step of sequentially transmitting the cached DTMF characters to the network side; if detecting that there are other invalid characters not included in the valid character set supported by the DTMF signal in the cached DTMF characters, then prompt the user to modify the detected invalid characters.

The beneficial effects of the present invention are as follows:
In the method and apparatus for transmitting a dual tone multi-frequency (DTMF) signal provided by the embodiment of the present invention, when an input instruction for inputting a DTMF character transmitted by a network side is received, the user input or pre-stored DTMF characters to be transmitted are obtained and cached into a character queue; when a character modification command is received, the cached character queue is modified according to the character modification indication information carried in the character modification command; and when it is determined that all DTMF characters to be transmitted are already cached, the DTMF characters in the cached character queue are transmitted to the network side according to the order of the DTMF characters in the character queue. The technical scheme solves the problem that it is inconvenient to modify the DTMF characters in the business use process existing in the related art, improves the operability of the business and the accuracy of the character input, facilitates the user operation, facilitates the user to perform edition operation to the DTMF character to be transmitted in the business use process, and improves the experience result of the user using the interactive control service. Meanwhile, the pre-stored character strings can be extracted and used as the DTMF characters to be transmitted and sent to the network side, which avoids the problem that the user has to hang up to obtain the information, and further facilities the user use.

### Brief Description of Drawings

FIG. 1 is a flow diagram of a method for transmitting a DTMF signal in Embodiment one of the present invention;
FIG. 2 is a flow diagram of a method for transmitting a DTMF signal in Embodiment two of the present invention;
FIG. 3 is a structure diagram of an apparatus for transmitting a DTMF signal in an embodiment of the present invention.

### Preferred Embodiments of the Present Invention

Aiming at the problem that the DTMF signal can only be transmitted in the conversation, it is inconvenient to make modification when there is an error in the transmitting process, and the operation is inefficient in the related art, the embodiment of the present invention provides a method for transmitting a DTMF signal, where the input DTMF characters are cached and then sent to the network side after input is completed and confirmed to be correct, and the error can be modified in time when there is an input error in the input process without the need to operate again after hanging up.

### Embodiment one

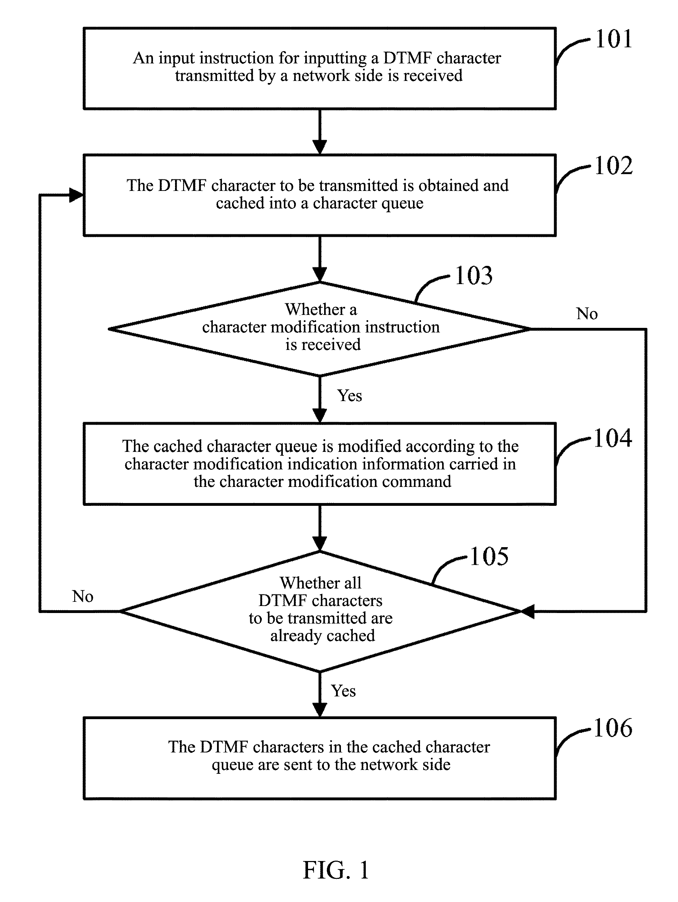

The flow of the method for transmitting a DTMF signal provided by the Embodiment one of the present invention is shown in FIG. 1, and the execution steps are as follows.

In step 101: an input instruction for inputting a DTMF character transmitted by a network side is received.

After the user initiates an interactive control service like the telephone recharging etc., the network side requires the user to input the desired information, such as the password of the rechargeable card, the mobile phone number, account No., etc., and at this moment the user inputs the above-mentioned information according to the input instruction of the network side.

In step 102: the DTMF character to be transmitted is obtained and cached into a character queue.

The obtaining the DTMF character to be transmitted can be obtaining the DTMF character input by the user, and specifically, the user input DTMF characters to be transmitted are obtained one by one according to the user input, and then stored to the character queue in the buffer sequentially according to the obtaining order.

The obtaining the DTMF character to be transmitted also can be obtaining a pre-stored DTMF character, and specifically, a pre-stored character string is obtained from a storage device as the DTMF character to be transmitted and cached in the character queue according to the storage order of the character string.

The buffer is divided into two kinds generally, volatile and non-volatile. The memory is generally a volatile buffer, and the FLASH storage device is generally a non-volatile buffer.

For example: the above-mentioned character queue cached in the conversation is generally cached in the memory, while the character string pre-stored in the non-conversation process is generally stored in the non-volatile buffer of the terminal, such as a FLASH storage device, etc. For example the telephone number stored in the name card holder belongs to the character string stored in the non-volatile buffer, and this kind of storage format is totally provided with the condition of checking the correctness. In the conversation process, the character string stored in FLASH storage device in the non-conversation process can be obtained directly, and read from the storage of the FLASH storage device to the memory to perform the operation.

In step 103: whether a character modification instruction is received is judged, if a character modification instruction is received, then step 104 is executed; if no character modification instruction is received, then step 105 is executed.

The character modification indication information is carried in the character modification command, and the character modification indication information includes: deleting a selected character in the character queue, modifying a selected character in the character queue, or inserting an appointed character in the character queue, etc.

In step 104: the cached character queue is modified according to character modification indication information carried in the character modification command.

After receiving the character modification instruction, different modification operations, for example, deleting a selected character in the character queue, modifying a selected character in the character queue, or inserting an appointed character in the character queue, etc. are performed according to different character modification indication information carried therein.

In step 105: whether all DTMF characters to be transmitted are already cached is judged; if all DTMF characters to be transmitted are already cached, step 106 is executed; if not all DTMF characters to be transmitted are already cached, then step 102 is executed.

After one DTMF character is obtained and cached, whether the character is a final character is judged; if yes, all DTMF characters to be transmitted are already cached in the character queue, and step 106 is executed;
if not, then not all DTMF characters to be transmitted are already cached yet and step 102 is returned.

In step 106: according to the order of the DTMF characters in the character queue, the DTMF characters in the cached character queue are sent to the network side.

The DTMF characters in the cached character queue in the buffer are scanned one by one, which realizes the objective of sending all DTMF characters in the cached character queue to the network side one by one according to the storage order.

When sending the DTMF characters in the cached character queue, it can be realized by adopting the AT command, for example: for a certain character being X therein, the command AT +VTS =" X" is adopted to send the character X to the network side, and the above-mentioned command is used to the DTMF characters in the cached character queue one by one, until all DTMF characters in the cached character queue are transmitted completely.

The above-mentioned step 104 modifies the cached character queue according to different character modification indication information carried in the received character modification command. Specifically it can include the following processes.

First of all, the received character modification command is analyzed;

Then, according to the difference of the analyzed character modification indication information, different operation processes are performed. Description will be made by taking the following three kinds of situations, i.e., deleting, modifying and inserting as the examples.

(1) if analyzing out that the character modification indication information carried in the character modification command is deleting a selected character in the character queue, the position of the selected character in the character queue is determined, and then the selected character in the character queue is deleted, and the positions of other characters in the character queue after the position of the deleted selected character are moved forward by one character position sequentially.

For example: there are already characters 0123456 in the character queue Q, and now the operation step of deleting the character 4 (selected character) in the queue is as follows:
the position of the character 4 in the character queue Q is determined as the fifth character;
the character of the fifth character position is deleted, and the character queue Q turns into 0123 56;
other characters (characters 56) after the fifth character position are moved forward by one character position sequentially, and then the character queue Q turns into 012356.

(2) if analyzing out that the character modification indication information carried in the character modification command is modifying a selected character in the character queue, then character position of the selected character in the character queue is determined, and the selected character located at the determined character position in the character queue is deleted, and an appointed character in the character modification indication information is stored in the determined character position.

For example: there are already characters 0123756 in the character queue Q, and now the operation step of modifying the character 7 (selected character) in the queue to the character 4 is as follows:
the position of the character 7 in the character queue Q is determined as the fifth character;
the character 7 of the fifth character position in the character queue Q is deleted, and the character queue Q turns into 0123 56;
the appointed character 4 is inserted to the fifth position of the character queue Q, and then the character queue Q turns into 0123456.

(3) if analyzing out that the character modification indication information carried in the character modification command is inserting an appointed character in the character queue, the position to be inserted of the appointed character in the character queue is determined, and then the positions of other characters in the character queue at the position to be inserted and after the position to be inserted are moved backward by one character position, and the appointed character is inserted at the position to be inserted.

For example: there are already characters 012356 in the character queue Q, and now the operation step of inserting the character 4 between the character 3 and the character 5 in the character queue Q is as follows:
the position to be inserted of the character 4 in the character queue Q is determined as the fifth character;
the characters of the fifth character position and the position after it are moved backward by one character position, and the character queue Q turns into 0123 56;
the appointed character 4 is cached to the fifth position of the character queue Q, and then the character queue Q turns into 0123456.

### Embodiment two

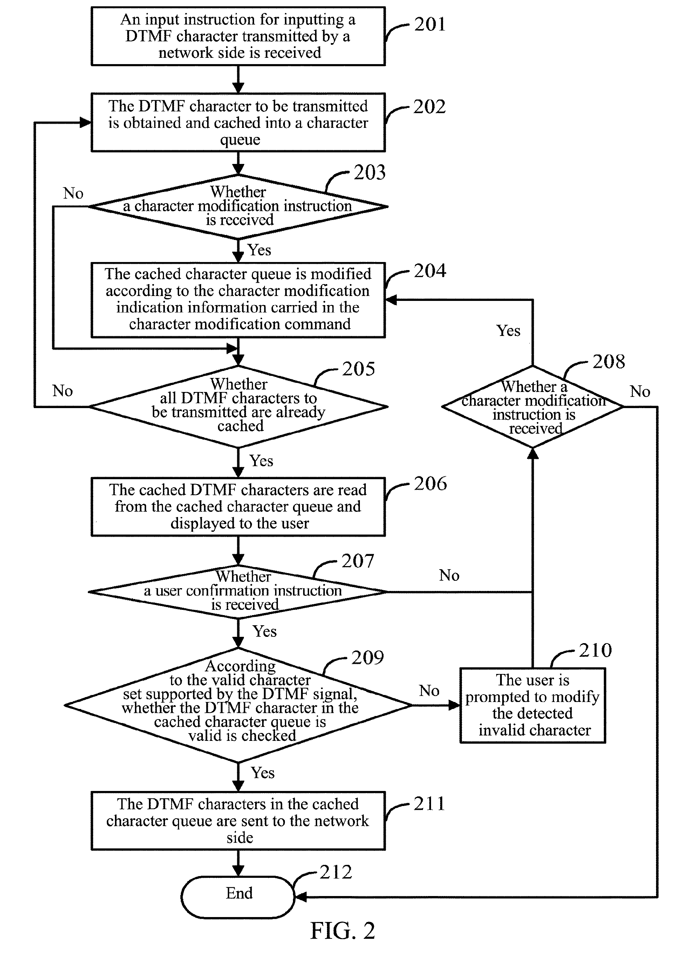

The flow of the method for transmitting a DTMF signal provided by the Embodiment two of the present invention is shown in FIG. 2, and the execution steps are as follows.

In step 201: an input instruction for inputting a DTMF character transmitted by a network side is received.

It is the same with step 101, and thus will not be repeated here.

In step 202: the DTMF character to be transmitted is obtained and cached into a character queue.

It is the same with step 102, and thus will not be repeated here.

In step 203: whether the character modification instruction is received is judged, if yes, then step 204 is executed; or else, then step 205 is executed.

It is the same with step 103, and will not be repeated here.

In step 204: the cached character queue is modified according to the character modification indication information carried in the character modification command.

It is the same with step 104, and will not be repeated here.

In step 205: whether all DTMF characters to be transmitted are already cached is judged; if not, step 202 is executed; if yes, then step 206 is executed.

It is the same with step 105, and will not be repeated here.

In step 206: the cached DTMF characters are read from the cached character queue and displayed to the user.

Since the DTMF characters to be transmitted are cached in the character queue in the service operation (such as in the conversation process) of the present application, the characters in the cached character queue can be echoed to the user through the display screen of the user equipment before being sent to the network side, so that the user determines whether they are correct or not. The user can perform correctness check and correction of the error input through the editable environment of the terminal, such as the dialing interface, etc.

In step 207: whether the user confirmation instruction is received is judged; if yes, then step 209 is executed; otherwise, step 208 is executed.

In step 208: whether the character modification instruction is received is judged; if yes, step 204 is executed; if neither the user confirmation instruction nor the character modification instruction is received within the set time period, then step 212 is executed.

In step 209: according to the valid character set supported by the DTMF signal, the validity of the DTMF characters in the cached character queue is checked; if they are valid, step 211 is executed; if they are invalid, step 210 is executed.

Preferably, in the standard protocol of the AT command, the valid character set supported by the AT command +VTS which transmits the DTMF signal is limited. It is regulated in the protocol that the valid character set supported by the command is 0-9, #, *, A-D. So, before sending the DTMF characters in the cached character queue, validity check needs to be performed for the DTMF characters to be transmitted, which avoids occurrence of errors in the transmission process.

The process of performing the validity check is mainly scanning the DTMF characters in the cached character queue in the buffer one by one, and checking whether they are within the range of the valid character set supported by the +VTS.

If it is detected that there are other invalid characters not included in the valid character set supported by the DTMF signal in the cached DTMF character, then step 210 is executed. If all cached DTMF characters are the characters in the valid character set supported by the DTMF signal, then the DTMF characters in character queue are confirmed to be valid. At this moment step 211 can be executed to perform the step of transmitting the DTMF characters to network side.

In step 210: the user is prompted to modify the checked invalid characters, and step 208 is executed.

When there are characters not supported in the standard protocol of the AT command in the DTMF characters in the cached character queue, that is, there are characters not included in the valid character set, then it needs to prompt the user to make modification, and step 208 is executed.

In step 211: according to the order of the DTMF characters in the character queue, the DTMF characters in the cached character queue are sent to the network side sequentially.

In step 212: the current flow ends.

In the two above-mentioned embodiments, the execution sequence of the process of displaying the cached DTMF characters to the user for confirmation in step 206 - step 207 and the process of checking the validity of the DTMF characters in the cached character queue in step 209 can be interchanged. That is, after performing step 205 and after judging that all DTMF character to be transmitted are already cached, step 209 is executed, and after executing step 209, step 206 is executed, and after performing step 207 and receiving the user confirmation instruction, step 211 is executed.

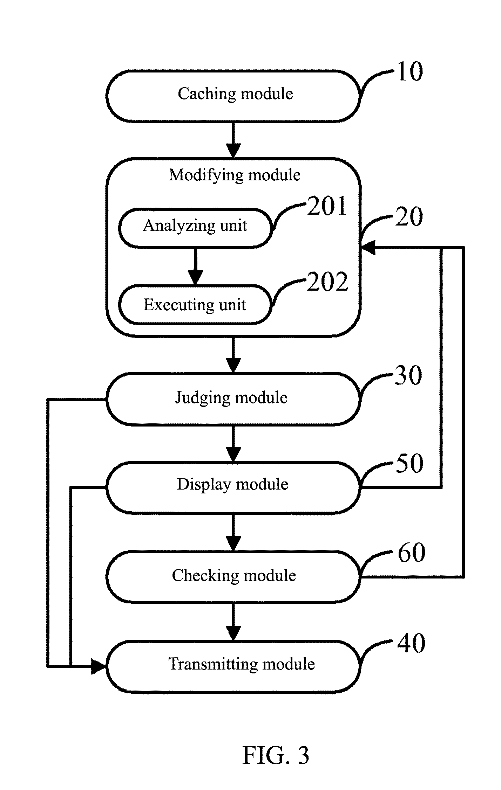

An apparatus for transmitting a DTMF signal can be constructed according to the above-mentioned method for transmitting the DTMF signal provided by the embodiment of the present invention. The apparatus can be provided in a terminal device, as shown in FIG. 3. The apparatus includes a caching module 10, a modifying module 20, a judging module 30 and a transmitting module 40.

The caching module 10 is configured to, when receiving an input instruction for inputting a DTMF character transmitted by a network side, obtain a user input or pre-stored DTMF character to be transmitted and cache it into a character queue.

Preferably, the above-mentioned caching module 10 is specifically configured to: when receiving an input instruction for inputting a DTMF character transmitted by a network side, obtain the user input DTMF characters to be transmitted one by one, and store them into the character queue in the buffer sequentially according to an obtaining order; or, obtain pre-stored character strings from a storage device as the DTMF characters to be transmitted and cache them in the character queue according to a storage order of the character strings.

The modifying module 20 is configured to, when receiving a character modification command, modify the cached character queue according to the character modification indication information carried in the character modification command.

Preferably, the above-mentioned modifying module 20 can specifically include: an analyzing module 201 and an executing module 202.

The analyzing module 201 is configured to analyze the received character modification command to obtain the character modification indication information carried therein.

The executing module 202 is configured to, if analyzing out that the character modification indication information carried in the character modification command is deleting a selected character in the character queue, determine the position of the selected character in the character queue, delete the selected character in the character queue, and move forward the positions of other characters in the character queue after the position of the deleted selected character by one character position sequentially; if analyzing out that the character modification indication information carried in the character modification command is modifying a selected character in the character queue, determine the character position of the selected character in the character queue, delete the selected characters located at the determined character position in the character queue, and store an appointed character in the character modification indication information in the determined character position; and if analyzing out that the character modification indication information carried in the character modification command is inserting an appointed character in the character queue, determine the position to be inserted of the appointed character in the character queue, move backward the positions of other characters in the character queue at the position to be inserted and after the position to be inserted by one character position, and insert the appointed character at the position to be inserted.

The judging module 30 is configured to judge whether all DTMF characters to be transmitted are already cached; and

The transmitting module 40 is configured to, when the judging module 30 determines that all DTMF characters to be transmitted are already cached, transmit the DTMF characters in the cached character queue to the network side according to an order of the DTMF characters in the character queue.

Preferably, the above-mentioned apparatus further includes:
a display module 50, configured to read the cached DTMF characters from the cached character queue and display to a user after the judging module 30 determines that all DTMF characters to be transmitted are already cached, and notify the transmitting module 40 to perform the step of sequentially transmitting the cached DTMF characters to the network side when receiving a confirmation instruction transmitted by the user.

Preferably, the above-mentioned apparatus further includes:
a checking module 60, configured to, before the transmitting module transmits the DTMF characters in the cached character queue to the network side, check validity of the DTMF character in the cached character queue according to a valid character set supported by a DTMF signal; if all cached DTMF character are the characters in the valid character set supported by the DTMF signal, then determine that the DTMF characters in the character queue are valid, and notify the transmitting module 40 to perform the step of sequentially transmitting the cached DTMF characters to the network side; if detecting that there are other invalid characters not included in the valid character set supported by the DTMF signal in the cached DTMF characters, then prompt the user to modify the checked invalid characters.

The embodiment of the present invention provides the above-mentioned method and apparatus for transmitting a dual tone multi-frequency signal. Through caching the DTMF characters to be transmitted in the character queue, the edition operation, such as the modification, deletion and inserting, etc., on the DTMF characters to be transmitted can also be implemented during the conversation, and the transmission is performed after it is determined that the input is correct, which avoids the problem that it is inconvenient to make modification in the DTMF signal transmission process and input has to be implemented again in the related art. The present invention improves the correctness of DTMF character transmission, facilitates the user operation, is convenient for the user to perform edition operation on the DTMF characters to be transmitted in the service use process, and improves the experience result of the user using the interactive control service.

The pre-stored character string also can be extracted and used as the DTMF character to be transmitted and sent to the network side in the present application, which avoids the user from hanging up for obtaining the information, and further facilities the user use. Meanwhile, since the DTMF characters to be transmitted can further be conveniently echoed to the user to perform the correctness confirmation, it further improves the accuracy rate, and further reduces the repetitive operation.

Obviously, those skilled in the art can make various changes and modifications to the present invention without departing from the spirit and range of the present invention. Thus, if these changes and modifications of the present invention fall into the scope of the claims of the present invention and its equivalent technology, then the present invention intends to include these changes and modifications as well.

## Claims

1. A method for transmitting a dual tone multi-frequency (DTMF) signal, comprising the following steps of:
when receiving an input instruction for inputting a DTMF character transmitted by a network side, obtaining the DTMF character to be transmitted and caching the DTMF character into a character queue;
when receiving a character modification command, modifying the cached character queue according to character modification indication information carried in the character modification command;
when determining that all DTMF characters to be transmitted are already cached, transmitting the DTMF characters in the cached character queue to the network side according to an order of the DTMF characters in the character queue.

2. The method according to claim 1, wherein, the step of obtaining the DTMF character to be transmitted comprises: obtaining a user input or pre-stored DTMF character;
the step of obtaining the DTMF character to be transmitted and caching the DTMF character into a character queue specifically comprises:
obtaining the user input DTMF characters to be transmitted one by one, and storing the DTMF characters to the character queue in a buffer sequentially according to an obtaining order; or,
obtaining pre-stored character strings from a storage device as the DTMF characters to be transmitted and caching the character strings in the character queue according to a storage order of the character strings.

3. The method according to claim 1, wherein, the character modification indication information carried in the character modification command comprises: deleting a selected character in the character queue, modifying a selected character in the character queue, or inserting an appointed character in the character queue.

4. The method according to claim 3, wherein, the step of modifying the cached character queue according to character modification indication information carried in the character modification command specifically comprises:
analyzing the received character modification command, and if analyzing out that the character modification indication information carried therein is deleting a selected character in the character queue, determining a location of the selected character in the character queue;
deleting the selected character in the character queue, and moving forward positions of other characters after the location of the deleted selected character in the character queue by one character position sequentially.

5. The method according to claim 3, wherein, the step of modifying the cached character queue according to character modification indication information carried in the character modification command specifically comprises:
analyzing the received character modification command, and if analyzing out that the character modification indication information carried therein is modifying a selected character in the character queue, determining a character position of the selected character in the character queue;
deleting the selected character located at the determined character position in the character queue, and storing an appointed character in the character modification indication information in the determined character position.

6. The method according to claim 3, wherein, the modifying the cached character queue according to character modification indication information carried in the character modification command specifically comprises:
analyzing the received character modification command, and if analyzing out that the character modification indication information carried therein is inserting an appointed character in the character queue, determining a position to be inserted of the appointed character in the character queue;
moving backward positions of other characters in the character queue at the position to be inserted and after the position to be inserted by one character position, and inserting the appointed character at the position to be inserted.

7. The method according to claim 1, wherein, before the step of transmitting the DTMF characters in the cached character queue to the network side, the method further comprises:
reading the cached DTMF characters from the cached character queue and displaying to a user;
after receiving a confirmation instruction transmitted by the user, performing the step of sequentially transmitting the DTMF characters in the cached character queue to the network side according to the order of the DTMF characters in the character queue.

8. The method according to any one of claims 1-7, wherein, before the step of transmitting the DTMF characters in the cached character queue to the network side, the method further comprises:
checking validity of the DTMF characters in the cached character queue according to a valid character set supported by a DTMF signal;
if all cached DTMF characters are the characters in the valid character set supported by the DTMF signal, then determining that the DTMF characters in the character queue are valid;
if detecting that there are other invalid characters not included in the valid character set supported by the DTMF signal in the cached DTMF characters, then prompting the user to modify the detected invalid characters.

9. An apparatus for transmitting a dual tone multi-frequency signal, comprising:
a caching module, configured to, when an input instruction for inputting a dual tone multi-frequency (DTMF) character transmitted by a network side is received, obtain the DTMF character to be transmitted and cache the DTMF character into a character queue;
a modifying module, configured to, when a character modification command is received, modify the cached character queue according to character modification indication information carried in the character modification command;
a judging module, configured to judge whether all DTMF characters to be transmitted are already cached;
a transmitting module, configured to, when the judging module determines that all DTMF characters to be transmitted are already cached, transmit the DTMF characters in the cached character queue to the network side according to an order of the DTMF characters in the character queue.

10. The apparatus according to claim 9, wherein, the caching module is specifically configured to:
when an input instruction for inputting a DTMF character transmitted by a network side is received, obtain user input DTMF characters to be transmitted one by one, and store the DTMF characters in the character queue in a buffer sequentially according to an obtaining order; or,
obtain pre-stored character strings from a storage device as the DTMF characters to be transmitted and cache the character strings in the character queue according to a storage order of the character strings.

11. The apparatus according to claim 9, wherein, the modifying module specifically comprises:
an analyzing module, configured to analyze the received character modification command to obtain the character modification indication information carried therein;
an executing module, configured to, if it is analyzed out that the character modification indication information carried in the character modification command is deleting a selected character in the character queue, determine a position of the selected character in the character queue, delete the selected character in the character queue, and move forward positions of other characters after the position of the deleted selected character in the character queue by one character position sequentially; if it is analyzed out that the character modification indication information carried in the character modification command is modifying a selected character in the character queue, determine a character position of the selected character in the character queue, delete the selected character located at the determined character position in the character queue, and store an appointed character in the character modification indication information in the determined character position; and if it is analyzed out that the character modification indication information carried in the character modification command is inserting an appointed character in the character queue, determine a position to be inserted of the appointed character in the character queue, move backward positions of other characters at the position to be inserted and after the position to be inserted by one character position in the character queue, and insert the appointed character at the position to be inserted.

12. The apparatus according to claim 9, wherein,
the apparatus further comprises: a display module, configured to read the cached DTMF characters from the cached character queue and display to a user after the judging module determines that all DTMF characters to be transmitted are already cached, and notify the transmitting module to perform the step of transmitting the cached DTMF characters to the network side when receiving a confirmation instruction transmitted by the user.

13. The apparatus according to any one of claims 9-12, wherein,
the apparatus further comprises: a checking module, configured to, before the transmitting module transmits the DTMF characters in the cached character queue to the network side, check validity of the DTMF characters in the cached character queue according to a valid character set supported by a DTMF signal; if all cached DTMF characters are the characters in the valid character set supported by the DTMF signal, then determine that the DTMF characters in the character queue are valid, and notify the transmitting module to perform the step of transmitting the cached DTMF characters to the network side; if detecting that there are other invalid characters not included in the valid character set supported by the DTMF signal in the cached DTMF characters, then prompt the user to modify the detected invalid characters.
